# EUROPEAN PATENT APPLICATION

(11) **EP 1 906 388 A1**
(43) Date of publication of application: **02.04.2008**
(21) Application number: 06781354.3
(22) Date of filing: 20.07.2006
(51) Int. Cl.: G11B 5/024

(54) **MAGNETIC DATA ERASING DEVICE**

(30) Priority: 20.07.2005 JP 2005209394
(71) Applicant: Orient Instrument Computer Co., Ltd, Chuo-ku Osaka-shi 540-6035 (JP)
(72) Inventor: ITO, Tomoaki Orient Instrument Computer Co., Ltd., Chuo-ku Osaka-shi, Osaka 540-6035 (JP)
(74) Representative: Albrecht, Ralf
(86) International application number: PCT/JP2006/314394
(87) International publication number: WO 2007/010986

(57) **Abstract**

It is an object of the present invention to provide a magnetic data eraser being inexpensive and having improved safety with a simple structure.

A magnetic data eraser 1 includes a power supply circuit 2, a receptacle 28a for accommodating a magnetic recording medium or a device incorporating a magnetic recording medium, primary and secondary coils 15 and 17 wound around an outer periphery of the receptacle 28a. The primary coil 15 is connected to the power supply circuit 2. The secondary coil is short-circuited. Excitation of the primary coil 15 through energization by the power supply circuit 2 generates an induced current in the secondary coil 17, thereby making an interaction between the primary and secondary coils 15 and 17. The interaction generates an alternating magnetic field, whereby the magnetic recording medium is degaussed, so as to erase magnetic data recorded in the medium.

## Description

### BACKGROUND OF THE INVENTION

### TECHNICAL FIELD

The present invention relates to a magnetic data eraser for erasing data recorded in a magnetic recording medium.

### BACKGROUND ART

There are various kinds of magnetic recording media for recording analog data or digital data by means of magnetism; for example, magnetic recording media for recording analog data include a VHS (video Home System) video tape and an 8 mm video tape, and magnetic recording media for recording digital data include a magnetic tape (MT) for a general-purpose computer. Further, an MO (Magneto-Optical Disc) that records data by means of both light and magnetism has been also put to practical use.

In the case of reusing or abandoning of these magnetic recording media, such security measures as making it impossible to reconstruct magnetic data by means of software such as a data erasing software or mechanically destroying a hard disk drive itself has been taken so as to protect the data from being read out by others. Magnetic recording media can be reused by erasing data recorded therein, but only physical formatting or logical formatting of the media cannot erase recorded data and has a disadvantage for ensuring security. Therefore, in the reuse, it is necessary to erase original data by overwriting meaningless data so as to ensure security, resulting in requiring a lot of effort and time.

The present inventor, prior to the present application, proposed a magnetic data eraser adapted to completely erase magnetic data recorded in media such as a hard disk drive incorporated in a computer and a magnetic tape for use in a general-purpose computer in the patent document 1 (JP 2005-78713A). This magnetic data eraser ensures erasure of data recorded in a hard disk drive or a magnetic tape in a short period of time dispensing with effort and time to overwrite meaningless data, thereby ensuring security in the reuse.
Patent Document 1: JP 2005-78713A

### SUMMARY OF THE INVENTION

### PROBLEMS TO BE SOLVED BY THE INVENTION

However, the magnetic data eraser having been proposed in the patent document 1 is designed to discharge a capacitor in large quantity and in bursts to apply high current to a coil, generating a strong magnetic field. That requires a large-capacitance capacitor and increases the expense of the eraser. Further, in the unlikely event that a user touches a charged capacitor, there is possible danger of a serious accident caused by electric shock.

It is therefore an object of the present invention made in view of such problems and drawbacks to provide a magnetic data eraser that is inexpensive and improves safety with a simple configuration.

### MEANS TO SOLVE THE PROBLEM

It is therefore an aspect of the present invention to achieve the object described above to provide a magnetic data eraser including a power supply circuit, a receptacle for accommodating one selected from a magnetic recording medium and a device incorporating a magnetic recording medium, a primary coil connected to the power supply circuit, and a secondary coil capable of being short-circuited, and being configured so that excitation of the primary coil through energization by the power supply circuit generates an induced current in the secondary coil, thereby making an interaction between the primary and secondary coils, the interaction generating an alternating magnetic field so as to erase magnetic data recorded in the one in condition that the one is contained in the receptacle.

In the magnetic data eraser of the present aspect, the secondary coil may be normally short-circuited or temporarily short-circuited by a member such as a switch. Further, the primary and secondary coils are preferably wound around an outer periphery of the receptacle.

Herein, "erasing" of magnetic data denotes erasing of magnetically recorded information and is not necessary to completely erase actual magnetic record to put back to blank state. Specifically, "erasing" includes erasing of information by disrupting magnetic data or partly erasing the data to such a degree that the data cannot be read out by reconstruction. "A device incorporating a magnetic recording medium" includes a computer body.

The magnetic data eraser of the present aspect has a simple configuration centering on the primary and secondary coils. Further, since an interaction between the primary and secondary coils generates an alternating magnetic field, the eraser dispenses with a large-capacitance capacitor even when a capacitor is used. That allows the use of a small-capacitance capacitor in contrast with the conventional magnetic data eraser. Consequently, the magnetic data eraser of the present aspect is inexpensive and quite safe.

The alternating magnetic field is preferably an attenuating alternating magnetic field whose peak value of magnetic flux density reduces as time passes.

In the magnetic data eraser of the preferred aspect, the alternating magnetic field is an attenuating alternating magnetic field, so that magnetic data is erased without destroying an internal circuit or a liquid crystal display of a computer even in processing of a computer body incorporating a hard disk drive, which is a magnetic recording medium, for example.

The power supply circuit may generate an attenuating alternating voltage whose peak value reduces as time passes.

Preferably, the magnetic data eraser further includes a switching device interposed between the power supply circuit and the primary coil, wherein the switching device is adapted to switch a mode between a mode in which the power supply circuit applies a voltage to the primary coil and a mode in which the primary coil is short-circuited.

It is convenient that the receptacle has a shape responding to accommodate wholly the one selected from the magnetic recording medium and the device incorporating a magnetic recording medium.

The primary and secondary coils may be wound around an outer periphery of the receptacle at sites apart from each other.

The primary and secondary coils may be wound around an outer periphery of the receptacle in such a manner that one of the coils is wound over the other coil. The primary and secondary coils may be wound in directions different from each other.

The primary and secondary coils may be wound around an outer periphery of the receptacle in a mixed manner. For example, the primary and secondary coils may be alternately wound around the outer periphery of the receptacle.

The magnetic data eraser, in which the power supply circuit includes a first capacitor and a first charging circuit for charging the first capacitor, may discharge the first capacitor via the primary coil so as to generate the attenuating alternating magnetic field within the receptacle.

The data eraser may energize also the secondary coil.

The data eraser may further include a second capacitor and a second charging circuit for charging the second capacitor and be adapted to discharge the second capacitor via the secondary coil, so as to energize the secondary coil.

### ADVANTAGEOUS EFFECT OF THE INVENTION

The present invention provides a magnetic data eraser being inexpensive and having improved safety with a simple structure.

### BRIEF DESCRIPTION OF THE DRAWINGS

Fig. 1 is a basic circuit diagram of a magnetic data eraser relating to embodiments of the present invention;
Fig. 2 is a schematic diagram showing an electrical current flowing through a primary coil in the magnetic data eraser shown in Fig. 1;
Fig. 3 is an exploded perspective view showing an internal structure of a magnetic data eraser of a first embodiment of the present invention;
Fig. 4 is a perspective view showing erasing operation with the use of the magnetic data eraser shown in Fig. 3;
Fig. 5 is a perspective view showing a principal part of a magnetic data eraser of a second embodiment of the present invention;
Fig. 6 is a perspective view showing a principal part of a magnetic data eraser of a third embodiment of the present invention;
Fig. 7 is a perspective view showing a principal part of a magnetic data eraser of a fourth embodiment of the present invention; and
Fig. 8 is an equivalent circuit diagram of a magnetic data eraser of a fifth embodiment of the present invention.

### DESCRIPTION OF THE PREFERRED EMBODIMENTS

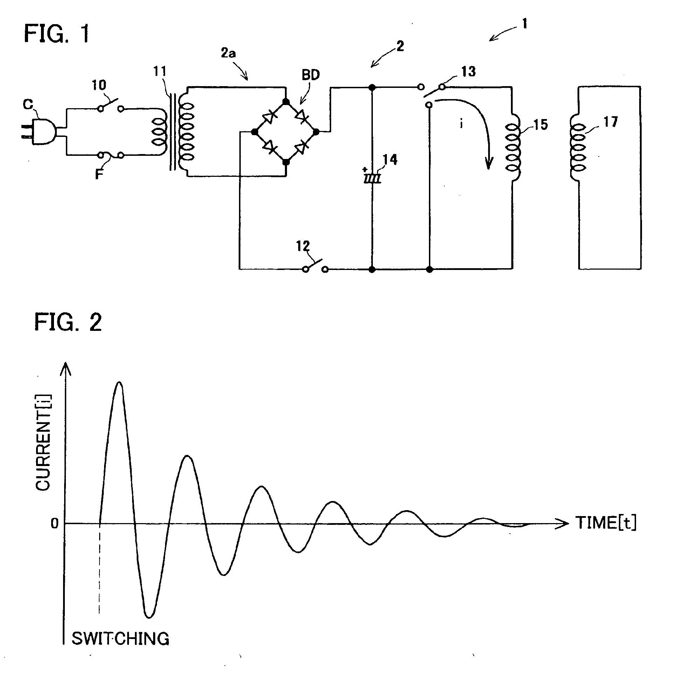

Now, preferred embodiments of the present invention will be described below, making reference to the accompanying drawings. Herein, in the description of the embodiments, a principle of operation of a magnetic data eraser of the invention will be described based on an embodiment shown in Fig. 1, prior to specific embodiments.

Fig. 1 is a basic circuit diagram of a magnetic data eraser relating to embodiments of the present invention. Fig. 2 is a schematic diagram showing an electrical current flowing through a primary coil in the magnetic data eraser shown in Fig. 1.

A magnetic data eraser 1 shown in Fig. 1 has a circuit mainly consisting of a power supply circuit 2, a primary coil 15, and a secondary coil 17. The primary coil 15 is connected to the power supply circuit 2. The secondary coil 17 is short-circuited to form a loop. The primary and secondary coils 15 and 17 are wound around an outer periphery of a receptacle for accommodating a magnetic recording medium or a device incorporating a magnetic recording medium.

The power supply circuit 2 includes a power transformer 11, a charging switch 12, a bridge diode BD, and a capacitor 14. The capacitor 14 shown in the figure uses an electrolytic condenser, but may appropriately use another kind thereof. The power transformer 11, the bridge diode BD, and the charging switch 12 constitute a charging circuit 2a for charging the capacitor 14. A voltage (electrical charge) generated in the power supply circuit 2 is applied to the primary coil 15, thereby generating an attenuating alternating magnetic field.

A primary winding of the power transformer 11 is connected to an AC plug C via a power switch 10 and a fuse F. The power transformer 11 increases a commercial AC voltage (AC100V) applied via the AC plug C, so as to output the increased voltage to a secondary winding of the power transformer 11. The secondary winding of the power transformer 11 is connected to the capacitor 14 via the bridge diode BD and the charging switch 12. Upon closing of the power switch 10 and the charging switch 12, the bridge diode BD performs full-wave rectification on a secondary voltage of the power transformer 11, so that the capacitor 14 is charged.

The present embodiment arranges a switching device 13 in series with the primary coil 15. The switching device 13 uses an electronic circuit such as a transistor and serves to immediately switch a mode between a first mode in which an electrical charge in the capacitor 14 is applied to the primary coil 15 (viz. the power supply circuit 2 applies a voltage to the primary coil 15) and a second mode in which the primary coil 15 is short-circuited.

The magnetic data eraser 1 having such a configuration generates an attenuating alternating magnetic field by operations described below. First, the switching device 13 is switched to the second mode so as to close the power switch 10 and the charging switch 12, so that the capacitor 14 is charged. Time required for charging is determined based on the capacitance of the capacitor 14 and the resistance of the secondary winding of the power transformer 11.

Upon completion of charging of the capacitor 14, the charging switch 12 is opened. At this moment, the capacitor 14 is fully charged.

Then, the switching device 13 is switched to the first mode, and switched again to the second mode within a short period of time afterward.

When the switching device 13 is switched to the first mode, the charged capacitor 14 is rapidly discharged via the primary coil 15. That is, the primary coil 15 having been unexcited until then is excited, with the consequence that a magnetic field around the primary coil 15 is changed. At this time, the secondary coil 17 has an induced current flowing therethrough in a direction of disturbing the change of the magnetic field around the primary coil 15, the current generating another magnetic field around the secondary coil 17.

Upon switching to the second mode by the switching device 13, an electromotive force is generated around the primary coil 15 in a direction of disturbing the change of the magnetic field around the secondary coil 17. Referring to Fig. 2, an interaction between the primary and secondary coils 15 and 17 makes an electrical current "i" flowing in the primary coil 15 an attenuating alternating current whose peak value reduces as time passes. An electric current flowing through the secondary coil 17 has a wave pattern similar to the current "i" though with its phase shifting. The currents flowing through the primary and secondary coils 15 and 17 are attenuated with reversal of polarity, leading to zero.

Consequently, an attenuating alternating magnetic field whose magnetic flux density gradually reduces with alternating of magnetic pole as time passes is generated around the coil 15. The magnetic data eraser of the present invention generates an attenuating alternating magnetic field based on this principle and uses the generated attenuating alternating magnetic field to degauss a magnetic recording medium or a hard disk drive incorporated in a computer body, so as to erase magnetic data recorded therein. More specifically, the magnetic data eraser of the present invention efficiently erases magnetic data by a synergistic effect of magnetic fields around the primary and secondary coils 15 and 17.

The principle of operation of the magnetic data eraser relating to the present invention is described above, but in an actual device, it is possible to appropriately add a resistor or a capacitor so as to regulate a phase, smooth a pulsating flow, and so on.

Now, specific embodiments of the magnetic data eraser of the present invention will be described in detail below, making reference to the accompanying drawings.

### [FIRST EMBODIMENT]

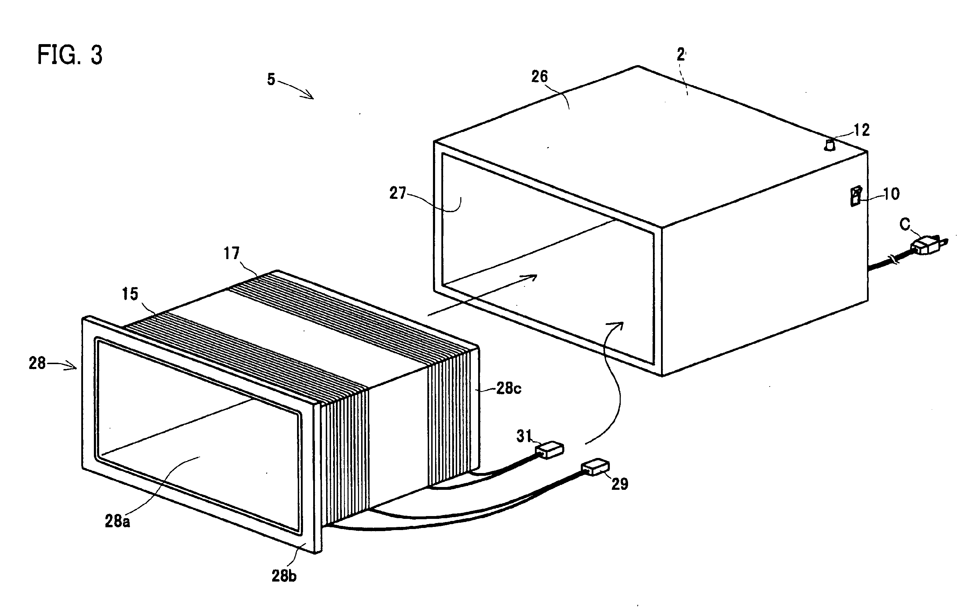

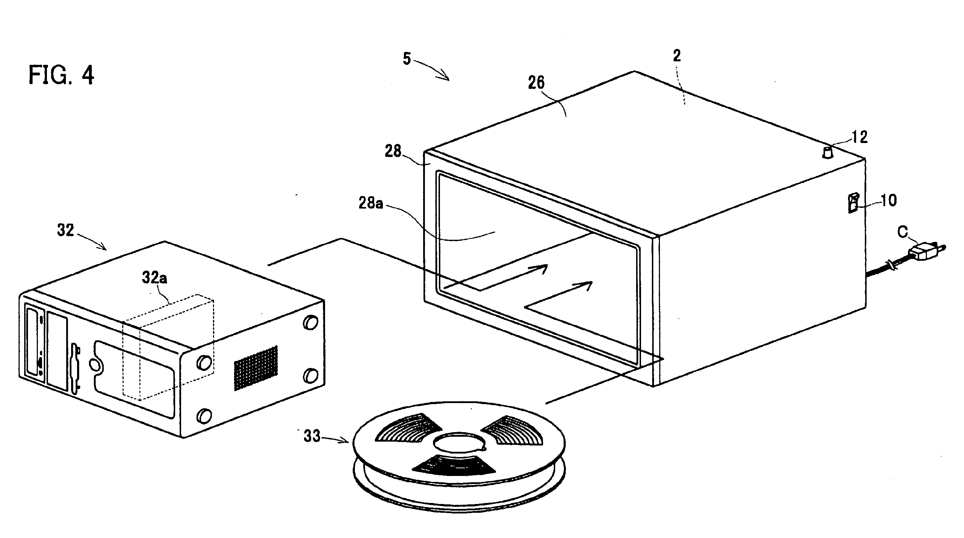

Fig. 3 is an exploded perspective view showing an internal structure of a magnetic data eraser of a first embodiment of the present invention. Fig. 4 is a perspective view showing erasing operation with the use of the magnetic data eraser shown in Fig. 3.

A magnetic data eraser 5 of the first embodiment, as shown in Fig. 3, has a coil winding frame 28 around which a coil is wound and a main body casing 26 housing the frame 28. The casing 26 is a tubular body having a rectangular cross section and made of molded synthetic resin. Further, the casing 26 has an inner surface entirely covered with a lamellar magnetic shield 27.

The frame 28 has a frame body 28c of a tubular body having a substantially rectangular cross section with a height shorter than a width and a flange 28b formed at the front end of the frame body 28c. The frame body 28c defines a cavity functioning as a receptacle 28a for accommodating a recording medium such as a magnetic tape 33 or device such as a computer 32 incorporating a recording medium. The frame 28 is a molding made of synthetic resin. The frame body 28c has a size enough to fit completely in the casing 26.

The primary coil 15 is wound around a front portion of an outer periphery of the frame body 28c (viz. outer periphery of the receptacle 28a), whereas the secondary coil 17 is wound around a rear portion thereof apart from the primary coil 15. Both ends of the coils 15 and 17 are pulled out backward to have connectors 29 and 31 attached thereto, respectively. In the first embodiment, the coils 15 and 17 each use an enamel wire and are secured to the frame body 28c by an insulating adhesive agent applied to the wound part.

The casing 26 houses each member of the power supply circuit 2 in the innermost of the casing 26, from which the AC plug C is pulled out backward. Further, the casing 26 has the power switch 10 at its right side and the charging switch 12 at its top face.

In assembly, the frame 28 is inserted into the casing 26 with the coils 15 and 17 wound therearound. Specifically, the frame body 28c and the connectors 29 and 31 are inserted into the casing 26 and the flange 28b is brought into contact with the open end of the casing 26, so as to secure the frame 28 to the casing 26. The connectors 29 and 31 are connected to connectors (not shown) disposed inside the casing 26, respectively, and then its assembly is completed.

The assembled eraser 5, as shown in Fig. 4, is constituted by the casing 26 and the receptacle 28a housed in the casing 26, the receptacle 28a accommodating a desktop computer 32, a large magnetic tape 33, and so on.

Next, operating procedures for erasing magnetic data with the use of the magnetic data eraser 5 will be described below. First, the power switch 10 is turned on and a knob of the charging switch 12 is pushed in so as to close the charging switch 12 for a predetermined period of time. At this time, in electrically conjunction with the closing of the charging switch 12, the switching device 13 (not shown in Figs. 3 and 4) is switched to the second mode in which the primary coil 15 is short-circuited. Thereby, the capacitor 14 is charged to increase its terminal voltage.

Then, as shown in Fig. 4, the desktop computer 32 incorporating a hard disk drive 32a is inserted into the receptacle 28a. Upon opening of the charging switch 12, the switching device 13 is once switched to the first mode in which an electrical charge in the capacitor 14 is applied to the primary coil 15, and within a short period of time afterward, switched again to the second mode. As described above, the charged capacitor 14 is discharged via the primary coil 15, which is excited. Accordingly, an induced current flows through the secondary coil 17, which is also excited. An interaction between the coils 15 and 17 generates attenuating alternating currents flowing through the coils 15 and 17, which generate an attenuating alternating magnetic field within the receptacle 28a in response to the currents. The computer 32 incorporated in the receptacle 28a is exposed to the attenuating alternating magnetic field, which erases magnetic data recorded in the hard disk drive 32a incorporated in the computer 32. Also in the case of the magnetic tape 33 inserted into the receptacle 28a, magnetic data recorded therein is erased by the same procedures.

### [SECOND EMBODIMENT]

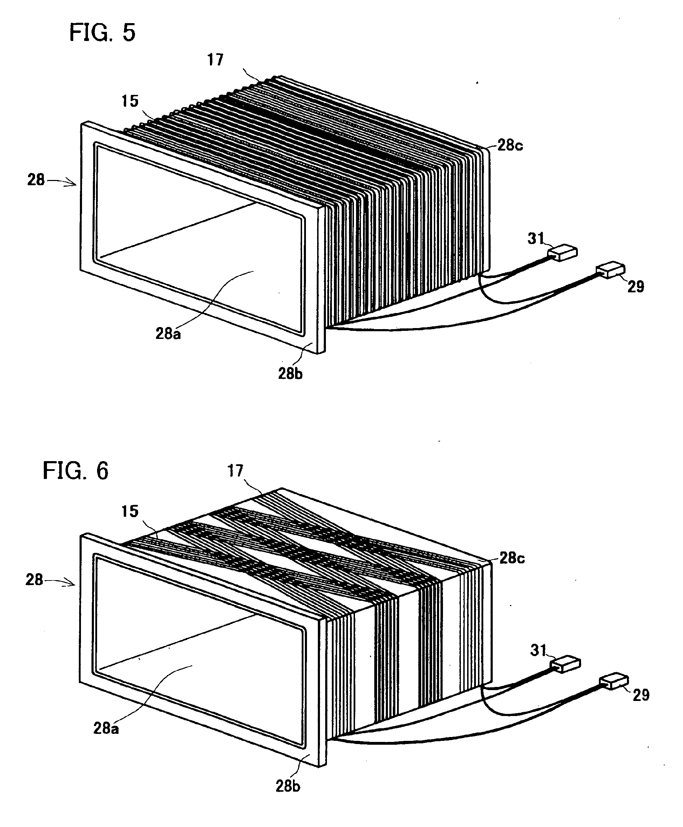

Modified embodiments described below each have basically the same configuration as that of the first embodiment except only the way to winding the coils 15 and 17 around the frame 18. Thus, duplicate descriptions are omitted for simplicity, giving the same numeral to the same component. In a second embodiment (Fig. 5), the primary coil 15 is wound around the outer periphery of the frame body 28c. The secondary coil 17 is wound on the wound primary coil 15. Windings of the coils 15 and 17 are in parallel.

### [THIRD EMBODIMENT]

Also in a third embodiment 3 (Fig. 6), the primary coil 15 is wound around the outer periphery of the frame body 28c, with the secondary coil 17 wound on the wound primary coil 15. However, the coils 15 and 17 are wound in an obliquely-crossed manner.

### [FOURTH EMBODIMENT]

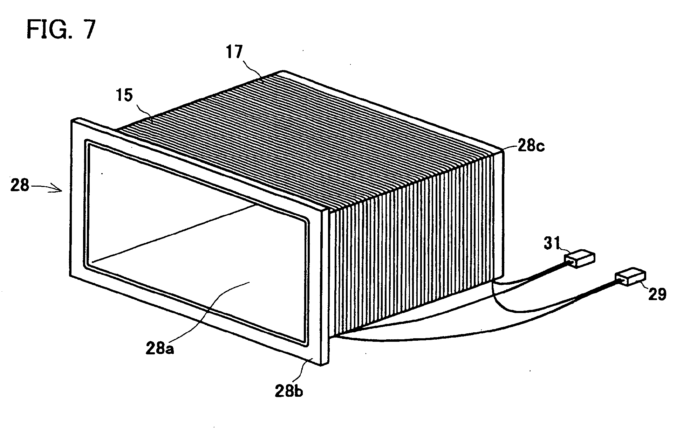

In a fourth embodiment (Fig. 7), the primary and secondary coils 15 and 17 are wound in a mixed manner. More specifically, the coils 15 and 17 are alternately wound around the outer periphery of the frame body 28c.

The magnetic data erasers of the first to fourth embodiments of the present invention are described above, but the present invention is not limited thereto, and it is possible to employ various configurations in response to an article whose magnetic data is to be erased.

For example, it is possible to use a plurality of primary coils and/or secondary coils. As an actual example, a pair of primary coils are wound around both sides of the outer periphery of the frame body 28c, with a secondary coil wound between the primary coils.

Further, the above-mentioned embodiments each have both the power switch 10 and the charging switch 12, but it is possible to have only the power switch 10 that is turned on and off to charge and stop charging the capacitor 14, dispensing with the charging switch 12.

Still further, the above-mentioned embodiments each have the charging switch 12 and the switching device 13, but the present invention is not limited thereto and is possible to automate an erasing operation by a configuration using a CPU, for example, whereby charging and discharging are automatically carried on by pushing a manual switch after inserting a recording medium into the receptacle.

Yet further, instead of the bridge diode BD, another rectifier can be used. Alternatively, instead of a commercial AC power source, a DC power source such as a battery can be used as the power supply circuit 2. Alternatively, instead of the capacitor, a commercial AC power source can be used with transformed.

Yet still further, it is possible to automatically reverse a polarity applied to the primary coil 15 by means of an internal circuit every time of an erasing operation. Such a configuration reverses directions of mechanical force acting between the coil and the frame body in energization every time, thereby preventing displacement of the coil relative to the frame.

### [FIFTHE EMBODIMENT]

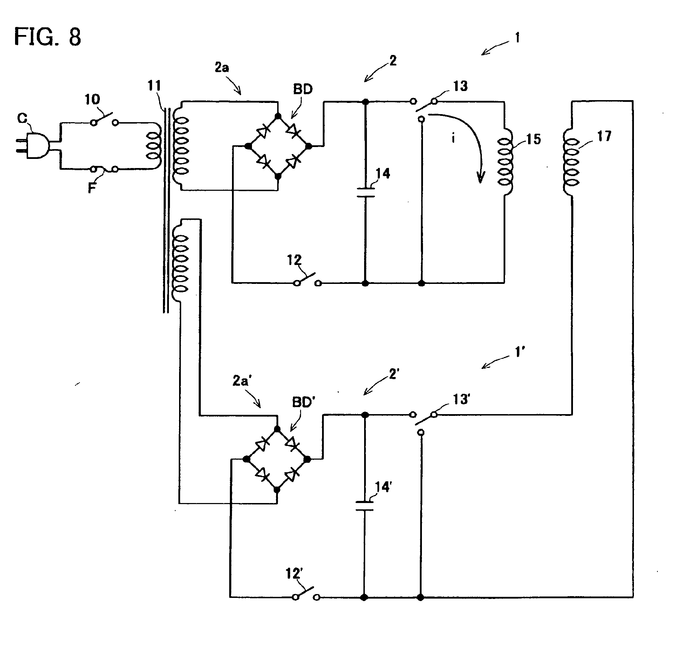

The above-mentioned embodiments each employ the circuit illustrated in Fig. 1, in which only the primary coil 15 is energized, but it is possible to energize both the primary and secondary coils 15 and 17 as shown in a circuit in Fig. 8.
The circuit shown in Fig. 8 has a first circuit including the primary coil 15, which has the same structure as that of the circuit illustrated in Fig. 1. Specifically, a primary coil 15 is connected to a power supply circuit 2 including a power transformer 11, a charging switch 12, a bridge diode BD, and a capacitor 14. However, a nonpolar capacitor is used as the capacitor 14. Further, a switching device 13 is arranged in series with the primary coil 15, so as to immediately switch a mode between a first mode in which an electrical charge in the capacitor 14 is applied to the primary coil 15 (viz. the power supply circuit 2 applies a voltage to the primary coil 15) and a second mode in which the primary coil 15 is short-circuited.

The circuit shown in Fig. 1 has the secondary coil 17 that is normally short-circuited, but the present embodiment has a second circuit including the secondary coil 17, which is the same energizing circuit as the first circuit.
Specifically, the secondary coil 17 uses a secondary winding of the power transformer 11 (hereinafter referred to as a power transformer 11') as a power source and is connected to a power supply circuit 2' including a charging switch 12', a bridge diode BD', and a nonpolar capacitor 14'. The power transformer 11', the bridge diode BD', and the charging switch 12' constitute a charging circuit 2a' for charging the capacitor 14'. The secondary coil 17 is also provided with a switching device 13', which uses an electronic circuit such as a transistor as well as the switching device 13. The switching device 13' is arranged in series with the secondary coil 17, so as to immediately switch a mode between a third mode in which an electrical charge in the capacitor 14' is applied to the secondary coil 17 (viz. the power supply circuit 2' applies a voltage to the secondary coil 17) and a fourth mode in which the secondary coil 17 is short-circuited.

Also in the magnetic data eraser of the present embodiment, the capacitor 14 is charged by switching of the switching device 13 of the first circuit to the second mode and closing of the power switch 10 and the charging switch 12. The capacitor 14' of the second circuit is also charged by switching the switching device 13' to the fourth mode.
After completion of charging of the capacitors 14 and 14', the charging switches 12 and 12' are opened.
Then, the switching device 13' of the second circuit is switched to the fourth mode.
Subsequently, the switching device 13 of the first circuit is once switched to the first mode, and within a short period of time afterward, switched to the second mode again.

In the first circuit, when the switching device 13 is switched to the first mode, the charged capacitor 14 is rapidly discharged via the primary coil 15. That is, the primary coil 15 having been unexcited until then is excited, with the consequence that a magnetic field around the primary coil 15 is changed. At this time, the secondary coil 17 has been short-circuited, so as to have an induced current flowing therethrough in a direction of disturbing the change of the magnetic field around the primary coil 15, the current generating another magnetic field around the secondary coil 17.

Further subsequently, an electrical charge having been charged in the capacitor 14' is applied to the secondary coil 17. Specifically, the switching device 13' of the second circuit is switched to the third mode, and within a short period of time afterward, switched to the fourth mode again.
As a consequence, the induced current generated in the secondary coil 17 is increased by the discharge from the capacitor 14', so that the secondary coil 17 generates a strong magnetic field.

That generates an electromotive force around the primary coil 15 in a direction of disturbing the change of the magnetic field around the secondary coil 17. The rest proceeds in the substantially same manner as the foregoing embodiment, that is, an interaction between the primary and secondary coils 15 and 17 makes an electrical current "i" flowing in the primary coil 15 an attenuating alternating current whose peak value reduces as time passes.

Consequently, an attenuating alternating magnetic field whose magnetic flux density gradually reduces with alternating of magnetic pole as time passes is generated around the coil 15, thereby erasing magnetic data recorded in a magnetic recording medium.

The above-mentioned embodiment generates a strong magnetic field around the secondary coil 17 by discharge of the capacitor 14' to the secondary coil 17 so as to generate an induced current in the short-circuited primary coil 15. However, at this time, the capacitor 14 of the first circuit may be discharged to the primary coil 15 again. Subsequently, the capacitor 14' may be discharged again to the secondary coil 17. In these cases, the switching devices 13 and 13' are appropriately switched. It is also possible to provide a circuit or an element so as to reverse the polarity of the primary coil 15 or the secondary coil 17 according to need.

The magnetic data eraser of the present invention may be used together with an electromagnetic wave generator/irradiator such as a magnetron so as to destroy optical recording data, or with a destructive device for physically destroying recording media by means of a member such as a destruction pin.

## Claims

1. A magnetic data eraser, comprising:
a power supply circuit;
a receptacle for accommodating one selected from a magnetic recording medium and a device incorporating a magnetic recording medium;
a primary coil connected to the power supply circuit; and
a secondary coil capable of being short-circuited, and
being configured so that excitation of the primary coil through energization by the power supply circuit generates an induced current in the secondary coil, thereby making an interaction between the primary and secondary coils, the interaction generating an alternating magnetic field so as to erase magnetic data recorded in the one in condition that the one is contained in the receptacle.

2. The magnetic data eraser as defined in claim 1,
the alternating magnetic field being an attenuating alternating magnetic field whose peak value of magnetic flux density reduces as time passes.

3. The magnetic data eraser as defined in claim 1 or 2,
wherein the power supply circuit is adapted to generate an attenuating alternating voltage whose peak value reduces as time passes.

4. The magnetic data eraser as defined in one of claims 1 to 3, further comprising a switching device interposed between the power supply circuit and the primary coil,
wherein the switching device is adapted to switch a mode between a mode in which the power supply circuit applies a voltage to the primary coil and a mode in which the primary coil is short-circuited.

5. The magnetic data eraser as defined in one of claims 1 to 4,
wherein the receptacle has a shape responding to accommodate wholly the one selected from the magnetic recording medium and the device incorporating a magnetic recording medium.

6. The magnetic data eraser as defined in one of claims 1 to 5,
wherein the primary and secondary coils are wound around an outer periphery of the receptacle at sites apart from each other.

7. The magnetic data eraser as defined in one of claims 1 to 5,
wherein the primary and secondary coils are wound around an outer periphery of the receptacle in such a manner that one of the coils is wound over the other coil.

8. The magnetic data eraser as defined in one of claims 1 to 5,
wherein the primary and secondary coils are wound around an outer periphery of the receptacle in a mixed manner.

9. The magnetic data eraser as defined in one of claims 1 to 8,
wherein the power supply circuit comprises a first capacitor and a first charging circuit for charging the first capacitor, and
being adapted to discharge the first capacitor via the primary coil so as to generate the attenuating alternating magnetic field within the receptacle.

10. The magnetic data eraser as defined in one of claims 1 to 9,
being adapted to energize the secondary coil.

11. The magnetic data eraser as defined in claim 10,
further comprising a second capacitor and a second charging circuit for charging the second capacitor, and
being adapted to discharge the second capacitor via the secondary coil.
